# EUROPÄISCHE PATENTSCHRIFT

(11) **EP 0 368 107 B1**
(45) Veröffentlichungstag und Bekanntmachung des Hinweises auf die Patenterteilung: **07.07.1993**
(21) Anmeldenummer: 89120068.5
(22) Anmeldetag: 28.10.1989
(51) Int. Cl.: E02B 3/12, E04H 9/14

(54) **Schutzvorrichtung gegen Wassereinwirkung**
Protective device against water effects
Dispositif de protection contre les effets des eaux

(30) Priorität: 09.11.1988 CH 4154/88
(43) Veröffentlichungstag der Anmeldung: 16.05.1990
(73) Patentinhaber: EBIOX SYSTEM AG, CH-6210 Sursee (CH)
(72) Erfinder: Heublein, Walter, CH-6204 Sempach (CH); Fleury, Pierre, CH-6204 Sempach (CH); Krieger, Abraham, CH-6022 Grosswangen (CH)
(74) Vertreter: Blum, Rudolf Emil Ernst

(56) Entgegenhaltungen:
- EP-A- 0 072 569
- FR-A- 2 026 477
- FR-A- 2 347 492
- US-A- 3 378 864
- US-A- 4 362 433
- US-A- 4 650 368
- ZEMENT-KALK-GIPS, Nr. 7, Juli 1978, Wiesbaden, DE; H. DIETRICH: "Eigenschaften und Eignung von Faserstoffen für Filter"
- "Das Geotextilhandbuch", 1986, St. Gallen, CH

## Beschreibung

Die Erfindung betrifft eine Schutzvorrichtung gegen Wassereinwirkung mit mindestens einem wasseraufnehmenden Körper, der eine wasserdurchlässige Hülle besitzt, deren Hüllenmaterial aus einem Vlies aus Kunststoffasern besteht und die einen aufweitbaren, geschlossenen Innenraum bildet, der einen Superabsorber-Stoff enthält, welcher mit einer watteartigen Trägerschicht kombiniert ist vgl. US-A-4 650 368.

Von Wasser können bekanntlich in verschiedenen Situationen schädliche Einwirkungen ausgehen. Im Falle von Hochwasser dringt es z.B. in Häuser und Kulturen ein und richtet dort Schäden an. In solchen Fällen werden Dämmungsmittel zur Abhaltung und Umlenkung von Wasser benötigt. Aehnliches gilt für den Abfluss von Löschwasser bei Bränden. Da dieses oft kontaminiert ist, muss mittels Dämmen sein Eindringen in die Kanalisation oder in Gewässer verhindert werden.

Herkömmlicherweise werden für solche Dämmzwecke Sandsäcke verwendet. Diese haben den Nachteil, dass sie ein grosses Lager- und Transportvolumen und Gewicht besitzen. Es ist im Notfall deshalb schwierig, rasch genügend Sandsäcke zu transportieren und auszulegen. Sie haben ferner ausschliesslich Dämmwirkung, so dass die schädliche Wassermenge nicht reduziert, sondern bloss umgelenkt wird. Zusätzlich sind deshalb Pumpen und dergleichen erforderlich, soll Wasser entfernt werden.

Es ist in der US-A-4 650 368 vorgeschlagen worden, sogenanntes Superabsorber-Material in wasserdurchlässige Hüllen einzuschliessen, das bei Wasserkontakt aufquillt und die Hülle zu einem vollen Körper expandiert, wobei gleichzeitig Wasser gebunden wird. Für das Hüllenmaterial ist dabei Polyaethylen- oder Polypropylenmaterial vorgesehen worden, das mit Oeffnungen oder Löchern versehen ist, derart, dass Wasser durch die Hülle ins Innere eindringen kann.

Es hat sich nun gezeigt, dass bei der vorgeschlagenen Lösung das Wasser zu wenig rasch bzw. in zu kleiner Menge aufgenommen wird, so dass die ausgelegten Hüllen überspült werden können und dass in einer ersten Phase Löschwasser oder dergl. nicht ausreichend gebunden wird.

Da der Einsatz solcher Mittel in Notfällen, wie Bränden, eine Frage der Zeit ist, können deshalb mindestens in einer ersten Phase weiterhin Schäden durch Wassereinwirkung entstehen.

Es stellt sich auf diesem Hintergrund deshalb die Aufgabe, die aus US-PS 4 650 368 bekannte Schutzvorrichtung so abzuwandeln und zu verbessern, dass die Wasseraufnahme wesentlich rascher erfolgen kann, wobei natürlich weder der trockene noch der nasse Superabsorber-Stoff, noch das einmal aufgenommene Wasser aus der Hülle soll austreten können. Die Hülle muss in nassem Zustand so reissfest und stabil sein, dass sie beim Abtransport das erhebliche Gewicht des aufgequollenen Superabsorbers aushält.

Die Lösung dieser Aufgabe erfolgt mit den im Patentanspruch 1 genannten Merkmalen.

Es hat sich überraschend gezeigt, dass mit einersolchen Ausgestlatung die gegensätzlichen Anforderungen der grossen Hüllenstabilität bei sehr guter Wasserdurchlässigkeit von aussen und bei gutem Rückhaltevermögen von innen optimal erfüllbar sind, und zwar bei minimaler Porengrösse des Vlieses von unter 10 µm. Dies wiederum gestattet es, den Superabsorber-Stoff als sehr feines Pulver mit entsprechend kleinen Korngrössen in der Hülle einzuschliessen, ohne dass die Gefahr besteht, dass das Pulver in trockenem Zustand durch das Vlies der Hülle austritt. Da die Geschwindigkeit und die Wirksamkeit der Wasserbindung bei kleinen Korngrössen des Superabsorber-Stoffs zunimmt, lässt sich durch das erfindungsgemässe Hüllenmaterial zum verbesserten Wasserdurchtritt durch die Hülle zugleich auch die Wasserbindung innerhalb der Hülle verbessern und beschleunigen. Dies führt insgesamt zu einer wesentlichen Wirkungsverbesserung der Schutzvorrichtung.

Nachfolgend werden nun anhand der Zeichnungen mehrere Ausführungen der Erfindung näher erläutert. Es zeigen dazu:
Fig. 1 eine erste, kissenartige Schutzvorrichtung im trockenen Zustand in der Aufsicht;
Fig. 2 eine schematische Schnittansicht entlang der Linie II-II in Fig. 1;
Fig. 3 die Schutzvorrichtung nach Fig. 1 im nassen Zustand;
Fig. 4 eine zweite Ausführung mit balgartigen Wänden im trockenen Zustand in der Seitenansicht;
Fig. 5 die Ausführung nach Fig. 4 in nassem Zustand in schematischer Schnittansicht;
Fig. 6 eine schlauchartige Ausführung in teilweise ausgelegtem Zustand;
Fig. 7 die Ausführung nach Fig. 6 in nassem Zustand;
Fig. 8 eine weitere Ausführung mit Befestigungslasche in nassem Zustand;
Fig. 9 eine als Schachtabdeckung ausgebildete Ausführung in nassem Zustand;
Fig. 10 eine schlauchförmige Ausführung in nassem Zustand.

Die Schutzvorrichtung gemäss der Erfindung bedient sich eines Superabsorber-Stoffes, wie sie z.B. als sog. Superabsorber-Polymere (SAP) bekannt sind. Solche Superabsorber-Polymere sind z.B. vernetzte (crosslinked) Acrylsäure Polymere, auf Stärke aufgepfropfte Natrium Polyacrylate, Verbindungen von Isobutylen-Maleinsäure-Anhydrid Copolymeren oder hydrolisierte Propfcopolymere aus Stärke und Polyacrylonitril. Solche Stoffe sind in Pulverform z.B. unter den Marken Salsorb (Allied Colloid Ltd.), Sannet (Celanese) oder Ki-Gel (Kuraray) erhältlich. Sie weisen die bereits erwähnte Eigenschaft auf, unter massiver Volumenzunahme Wassermengen zu binden, die einem Vielfachen ihres Eigenvolumens und Eigengewichts entsprechen.

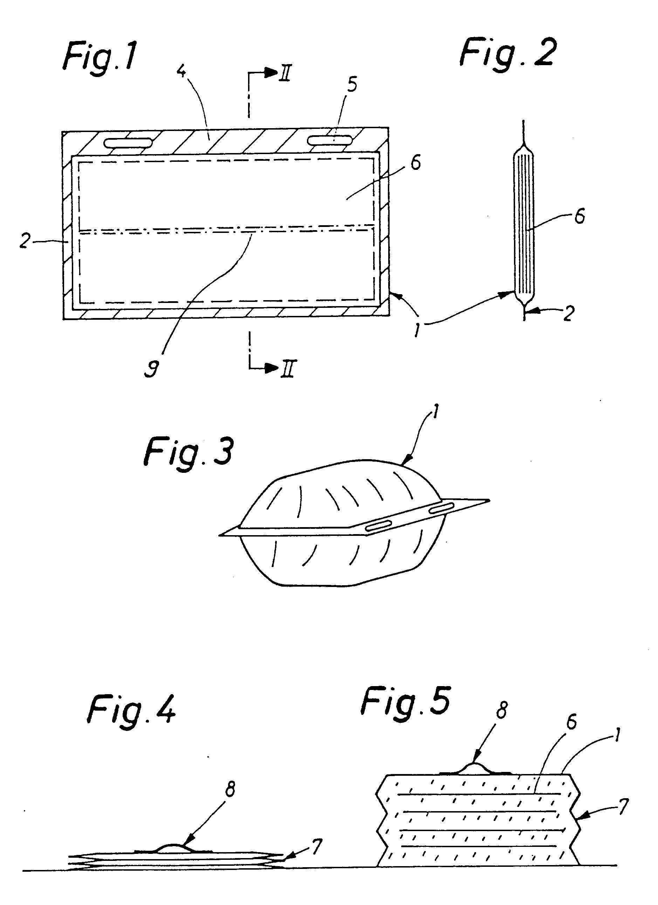

Die Schutzvorrichtung (vgl. insbesondere Fig. 1 bis 3) besitzt Elemente mit einer Hülle 1 aus einem Polyestervlies. Das Vlies aus Polyester-Fasern ist so dicht, dass seine Poren eine Grösse unter 5 bis 10 µm besitzen. Damit ist das Vlies auch im nassen Zustand reissfest genug, um die Beanspruchungen, welche bei dieser Anwendung auftreten, auszuhalten. Ueberraschenderweise ist das Vlies auch bei derart geringer Porengrösse sehr gut wasserdurchlässig.

Der Superabsorber-Stoff ist mit kleinen Korngrössen innerhalb der Hülle 1 verteilt angeordnet. Die kleinen Korngrössen sind vorteilhaft, weil dadurch die Geschwindigkeit der Wasseraufnahme erhöht wird. Dies ist bei der vorliegenden Anwendung von Bedeutung. Eine Korngrössenverteilung zwischen 0 und 800 µm Korndurchmesser hat sich als optimal erwiesen. Mit der geringen Porengrösse des Vlieses kann verhindert werden, dass die feinen Anteile des Pulvers aus der Hülle austreten. Dies ist besonders bei der Lagerung und dem Transport der Schutzvorrichtungen von Bedeutung, weil, falls die feinen Pulveranteile verloren gehen, die Wasseraufnahmegeschwindigkeit sich verschlechtert.

Innerhalb der Hülle 1 ist eine bestimmte Menge Superabsorber-Stoff angeordnet. Die Menge ist dabei so auf den Schnitt der Hülle 1 abgestimmt, dass das bei Wasseraufnahme entstehende Volumen dem erzielbaren Innenvolumen der aufgeweiteten Hülle entspricht.

Der pulverförmige Superabsorber-Stoff ist ferner innerhalb der Hülle möglichst gut verteilt, so dass keine Knollenbildung auftritt, wenn er mit Wasser in Kontakt kommt. Zu diesem Zweck ist das Pulver in einer Fluff-Schicht einer Dicke von etwa 5 bis 7 mm verteilt. Dazu wird das Pulver bei der Herstellung mit Unterdruck in diese watteartige Faserschicht hinein gezogen.

Im Ausführungsbeispiel gemäss den Figuren 1 bis 3 ist eine Fluff-Schicht 6 schematisch angedeutet.

Gemäss den Figuren 1 bis 3 besitzt die Hülle 1 einen kissenartigen Schnitt. Ebene Polyestervlies-Blätter der erwähnten Beschaffenheit sind entlang ihres Randes 2 mittels einem wasserfesten Leim verbunden. An einer Seite bildet ein erweiterter Rand 4 Grifflöcher 5. Innerhalb der so gebildeten Hülle ist der Superabsorber-Stoff über die Fläche verteilt angeordnet. Hierzu ist die Fluff-Schicht 6 in die Hülle eingelegt, wobei sich bei jeder Lage der Hülle eine gleichmässige, über das ganze Volumen verteilte Superabsorberanordnung ergibt. Wesentlich dabei ist eine Verteilung über die Fläche sowie eine für Wasser zugängliche Anordnung.

In trockenem Zustand ist die Hülle 1 eines Elements gemäss dem Ausführungsbeispiel nach Fig. 1 völlig flach (vgl. Fig. 2) und benötigt wenig Lagerraum. Sie weist Masse von etwa 80x40 cm auf und enthält etwa 100 gr Superabsorber der oben erwähnten Art, womit sich eine Wasseraufnahmefähigkeit von ca. 200 gr Wasser pro gr Pulver ergibt. Das Trockengewicht der Schutzvorrichtung ist damit vernachlässigbar niedrig. Bei Wasserkontakt werden ca. 20 lt Wasser absorbiert und das Gewicht erhöht sich auf ca. 20 kg. In diesem Zustand ist das Element gemäss den Fig. 1 und 2 in Figur 3 gezeigt. Wie man daraus ersieht, expandiert sie zu einem Kissen oder Sack von etwa 20 kg Eigengewicht.

Werden mehrere solcher Hüllen 1 nebeneinander und in mehreren Reihen hintereinander ausgelegt, so binden sie in einer ersten Phase rasch eine grosse Menge (Lösch-)Wasser und dienen dann als Sperre. Expandierte Elemente können, falls dies im jeweiligen Fall sinnvoll erscheint, laufend gegen trockene Hüllen ausgewechselt oder durch solche ergänzt werden. Wegen des geringen Trockenvolumens und Gewichts können damit sehr schnell Sperren errichtet, ergänzt und erneuert werden.

Das Volumen der Hülle und die Menge Superabsorber-Stoff ist vorzugsweise so bemessen, dass jeweils ein expandiertes Kissen von einer oder zwei Personen getragen werden kann. Es liegt vorzugsweise im Bereich zwischen 15 und maximal 50 kg Nassgewicht. Die wasserdurchlässige Hülle muss so ausgebildet sein, dass sie diesem Gewicht standhält und beim Abtransport nicht reisst. Das für die Hülle 1 verwendete Polyestervlies weist deshalb eine Höchstzugkraft von ca. 100 N/5 cm gemäss DIN 53857 auf. Für die Erleichterung des Abtransports sind ferner die Grifföffnungen 5 im Rand 4 vorgesehen (vgl. Fig. 1).

Anstelle der in den Figuren 1 bis 3 gezeigten Kissenform kann die Hülle auch andere Formen besitzen. Um den gegenseitigen Halt von zu Sperren aufgeschichteten Kissen zu verbessern, kann z.B. die Hülle des in Fig. 1 gezeigten Kissens in der Mitte zusätzlich eine Klebestelle 9 besitzen, so dass es in expandiertem Zustand in der Mitte eine Vertiefung besitzt, in welche ein seitlich etwas verschobenes, darüber liegendes Kissen eingreift.

Die Hülle kann ferner auch balgartig ausgebildet sein, wie in den Figuren 4 und 5 gezeigt. Die Seitenwände 7 sind in trockenem Zustand balgartig zusammengefaltet (Fig. 4) und entfalten sich bei Expansion des Superabsorber-Stoffs. Der so entstehende Körper besitzt im wesentlichen Quaderform, was die Ausbildung von Sperren und das Stapeln beim Wegtransport erleichtert. Auch hier ist an der Hülle 1 ein Traggriff 8 vorgesehen.

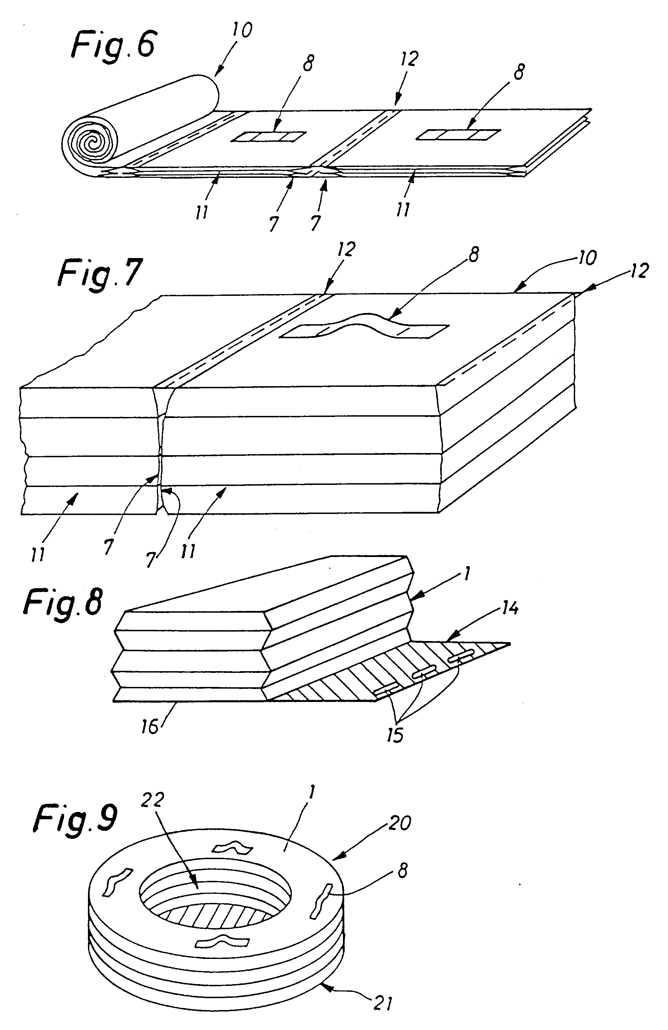

Derartige Hüllen können auch zu schlauchartigen Elementen 10 verbunden sein, die z.B. in Form von Rollen transportierbar sind, wie in Fig. 6 dargestellt. Damit lassen sich durch blosses Entrollen sehr rasch Sperren und Flächenabdeckungen erzielen. Um den Wegtransport der Vorrichtung in nassem Zustand zu ermöglichen, ist das schlauchartige Element 10 in einzelne Kammern 11 unterteilt, die voneinander trennbar sind. Hierzu sind an den Trennstellen 12 jeweils zwei balgartig gefaltete Seitenwände 7 vorgesehen. Die Trennstelle 12 kann durch einen Klettverschluss oder eine andere leicht öffenbare Vorrichtung gebildet sein. Der Verschluss muss nur geringe Kräfte übernehmen, da er bloss den Zusammenhalt der verschiedenen Kammern beim Entrollen sicherstellen muss. In Fig. 7 ist ein Teil des erwähnten schlauchartigen Elements in nassem Zustand dargestellt. Die einzelnen Kammern 11 liegen seitlich aneinander an und bilden auf diese Weise eine Sperre. Zum Wegtransport kann eine Kammer nach der andern abgetrennt und separat verladen werden, wozu ebenfalls Handgriffe 8 vorgesehen sind.

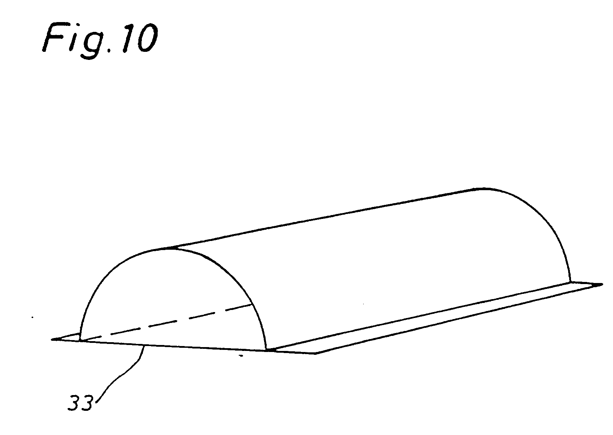

In Figur 10 ist ferner ein schlauchartiges Elemente dargestellt, das nicht in Teile auftrennbar ist. Die Ausführung gemäss Fig. 10 hat dabei in nassem Zustand einen halbkreisförmigem Querschnitt, welcher einen ebenen Boden 33 aufweist, der eine stabile und dichtende Auflage bildet. Die Ausführung gemäss Figur 10 kann in trockenem Zustand in Rollenform aufbewahrt werden, was ein sehr rasches Auslegen gestattet. Die Elemente bilden eine dichte Sperre an sich beliebiger Länge.

Das spezifische Gewicht eines Kissens oder einer Kammer der beschriebenen Art im Nasszustand liegt etwa im Bereich des spezifischen Gewichts von Wasser, das ja seinen Hauptgehalt ausmacht. Solange der Wasserstand niedriger ist als die Höhe eines expandierten Elements besteht keine Gefahr, dass das Element vom Wasser fortgetragen wird. Eine Sperre bleibt deshalb wirksam, solange der Wasserstand relativ niedrig ist, wie dies z.B. bei abfliessendem Löschwasser der Fall ist.

Bei Sperren im Bereich höherer Wasserstände müssen die Elemente der Schutzvorrichtung beschwert oder befestigt werden. In Fig. 8 ist das Beispiel eines solchen Elements im Nasszustand dargestellt. An die Hülle 1 ist eine Lasche 14 angesetzt, auf welche z.B. Beschwerungsgewichte gelegt werden können. Ferner besitzt die Lasche Oesen 15, mittels welchen das Element am Boden oder an Nachbarelementen befestigt werden kann. Die Lasche kann dabei in den Boden 16 des Elements integriert und zusammen mit diesem aus einem wasserundurchlässigen Material sein, das gegen den Boden hin eine Dichtfunktion aufweist. Dies ist insbesondere von Bedeutung, wenn das Element z.B. als Schachtabdeckung eingesetzt wird.

In Fig. 9 ist schliesslich ein weiteres, speziell als Schachtabdeckung 20 ausgebildetes Element gezeigt, welches im wesentlichen ring- oder tellerförmig ausgebildet ist. Der Boden 21 wird vorzugsweise durch eine wasserundurchlässige Folie gebildet. Die zentrale Ausnehmung 22 dient zur Beschwerung der Schachtabdeckung. Handgriffe 8 dienen zur Erleichterung des Wegtransports in nassem Zustand.

Die Elemente der verschiedenen Ausführungen sind in trockenem Zustand flach oder zusammengerollt. Um bei der Lagerung und beim Transport einen vorzeitigen Wasserkontakt zu verhindern, sind sie in wasserundurchlässigen Verpackungen untergebracht. Es können dank dem geringen Gewicht eine Vielzahl von Hüllen im Trockenzustand in einer Verpackung enthalten sein. Beim Einsatz werden die Hüllen der Verpackung entnommen und auf die beschriebene Weise eingesetzt.

Nach erfolgtem Einsatz werden die expandierten Elemente gesammelt und auf einem Trocknungsplatz abgelagert. Hierzu kann z.B. eine gedeckte, gut belüftete Halle dienen. Das aufgenommene Wasser verdunstet, worauf sich das Volumen wieder reduziert. Die Elemente können nur einmal verwendet werden, da der Superabsorber-Stoff sich bei Wasseraufnahme irreversibel umsetzt. Es ist deshalb von Bedeutung, dass die verbrauchten und getrockneten Hüllen aus Polyestervlies unbedenklich durch Verbrennen beseitigt werden können. War das aufgenommene Wasser kontaminiert, so bleiben die entsprechenden Stoffe in der Hülle zurück. Anstelle eines grossen Löschwasservolumens können dann die getrockneten Hüllen auf geeignete Weise weiterbehandelt werden.

Die Anwendung der erläuterten Vorrichtung beschränkt sich nicht auf Brand- und Katastrophenfälle. So kann sie etwa dazu verwendet werden, Restwassermengen rasch aufzunehmen, die wegen zu geringer Höhe von einer Pumpe nicht mehr aufgenommen werden können.

Ferner kann für spezielle Fälle vorgesehen sein, den Superabsorber-Stoff zur Gewichtserhöhung und zur Erzielung eines Verdünnungseffekts mit trockenen, anorganischen Materialien zu mischen. Dazu sind etwa Talk, Quarzsand, Caolin, Kreide, Steinmehl, Bariumsulfat oder Kieselgur geeignet. Damit wird zwar das Trockengewicht erhöht, es kann sich dafür eine Beschwerung bzw. Befestigung der Elemente erübrigen.

## Patentansprüche

1. Schutzvorrichtung gegen Wassereinwirkung mit mindestens einem wasseraufnehmenden Körper, der eine wasserdurchlässige Hülle (1) besitzt, deren Hüllenmaterial aus einem Vlies aus Kunststoffasern besteht und die einen aufweitbaren, geschlossenen Innenraum bildet, der einen Superabsorber-Stoff enthält, welcher mit einer watteartigen Trägerschicht (6) kombiniert ist, dadurch gekennzeichnet, dass als Hüllenmaterial ein wasserdurchlässiges Faservlies aus Polyesterfasern mit Poren einer Grösse von unter 10 µm vorgesehen ist und dass das Superabsorber-Pulver mit einer Korngrösse von maximal ca. 800 µm in der watteartigen Trägerschicht aus einem Fluff-Material verteilt angeordnet ist.

2. Schutzvorrichtung nach Anspruch 1, dadurch gekennzeichnet, dass der pulverförmige Superabsorber-Stoff eine Korngrössenverteilung im Bereich zwischen 0 und 800 µm besitzt.

3. Schutzvorrichtung nach Anspruch 1, dadurch gekennzeichnet, dass die Hülle (1) Sack-, Kissen- oder Schlauchform besitzt.

4. Schutzvorrichtung nach einem der vorangehenden Ansprüche, dadurch gekennzeichnet, dass ein Teil (7) der Hülle (1) zur Aufweitung des Innenraums balgförmig gefaltet ist.

5. Schutzvorrichtung nach einem der vorangehenden Ansprüche, dadurch gekennzeichnet, dass die Hülle (1) im trockenen Zustand im wesentlichen flach ausgebildet ist.

6. Schutzvorrichtung nach einem der vorangehenden Ansprüche, wobei die Hülle (1) schlauchförmig ist, dadurch gekennzeichnet, dass der Schlauch (10) mit Trennstellen (12) zum Abtrennen von Schlauchteilen versehen ist.

7. Schutzvorrichtung nach einem der Ansprüche 1 bis 6, dadurch gekennzeichnet, dass die Hülle (1) ringförmig (20) ausgebildet ist.

8. Schutzvorrichtung nach einem der vorangehenden Ansprüche, dadurch gekennzeichnet, dass aussen an der Hülle Traggriffe (5; 8) angeordnet sind.

9. Schutzvorrichtung nach einem der vorangehenden Ansprüche, dadurch gekennzeichnet, dass an der Hülle (1) Laschen (14) für die Befestigung oder Beschwerung der Vorrichtung angeordnet sind.

10. Schutzvorrichtung nach Anspruch 8, dadurch gekennzeichnet, dass die Traggriffe als Ausnehmungen (5) im Hüllenmaterial vorgesehen sind.

## Claims

1. Device for a protection against the influence of water, having at least one water absorbing body which includes a water permeable jacket (1) of which the jacket material consists in a non-woven of synthetic fibres and which forms an expandable, closed inner space which contains a superabsorber material which is combined with a wadding-like supporting layer (6), characterized in that a water permeable fibrous non-woven of polyester fibres with pores of a size below 10 µm is foreseen as jacket material and in that the superabsorber powder with a grain size of maximal 800 µm is arranged distributively in the wadding-like supporting layer of a fluff-material.

2. Protection device according to claim 1, characterized in that the powder-like superabsorber material has a grain size distributed in the range between 0 and 800 µm.

3. Protection device according to claim 1, characterized in that the jacket (1) has the shape of a bag, cushion or hose.

4. Protection device according to one of the preceding claims, characterized in that a part (7) of the jacket (1) is folded in a bellows-like manner for an expanding of the inner space.

5. Protection device according to one of the preceding claims, characterized in that the jacket (1) in a dry state is formed substantially flat.

6. Protection device according to one of the preceding claims, whereby the jacket (1) is of a hose-like shape, characterized in that the hose (10) includes severing areas (12) for a severing of hose portions.

7. Protection device according to one of the claims 1 to 6, characterized in that the jacket (1) has a ring-like shape (20).

8. Protection device according to one of the preceding claims, characterized in that carrying grips (5; 8) are arranged at the outside of the jacket.

9. Protection device according to one of the preceding claims, characterized in that flaps (14) for an arresting or weighing down of the device are arranged at the jacket (1).

10. Protection device according to claim 8, characterized in that the carrying grips are foreseen as recesses (5) in the material of the jacket.

## Revendications

1. Dispositif de protection contre les effets des eaux comportant au moins un corps absorbant l'eau, qui comprend une enveloppe perméable à l'eau (1) dont la matière d'enveloppe est faite d'un voile de fibres en matière synthétique et qui forme un espace intérieur clos expansible contenant une matière superabsorbante combinée avec une couche de support du genre ouate (6), caractérisé en ce qu'un voile perméable à l'eau de fibres de polyester présentant des pores d'une dimension inférieure à 10 µm est prévu à titre de matière d'enveloppe et une poudre superabsorbante d'une granulométrie maximale d'environ 800 µm est répartie dans la couche de support du genre ouate faite d'une matière du genre duvet.

2. Dispositif de protection suivant la revendication 1, caractérisé en ce que la matière surperabsorbante en poudre présente une répartition granulométrique comprise entre 0 et 800 µm.

3. Dispositif de protection suivant la revendication 1, caractérisé en ce que l'enveloppe (1) a la forme d'un sac, d'un coussin ou d'un boyau.

4. Dispositif de protection suivant l'une quelconque des revendications précédentes, caractérisé en ce qu'une partie (7) de l'enveloppe est pliée en forme de soufflet pour l'expansion de l'espace intérieur.

5. Dispositif de protection suivant l'une quelconque des revendications précédentes, caractérisé en ce que l'enveloppe (1) est d'une configuration en substance plate à l'état sec.

6. Dispositif de protection suivant l'une quelconque des revendications précédentes dans lequel l'enveloppe (1) a la forme d'un boyau, caractérisé en ce que le boyau (10) est pourvu d'endroits de séparation (12) pour désolidariser des segments de boyau.

7. Dispositif de protection suivant l'une quelconque des revendications 1 à 6, caractérisé en ce que l'enveloppe (1) est de forme annulaire (20).

8. Dispositif de protection suivant l'une quelconque des revendications précédentes, caractérisé en ce que des poignées (5, 8) sont prévues à l'extérieur sur l'enveloppe.

9. Dispositif de protection suivant l'une quelconque des revendications précédentes, caractérisé en ce que des languettes (14) pour la fixation ou le lestage du dispositif sont prévues sur l'enveloppe (1).

10. Dispositif de protection suivant la revendication 8, caractérisé en ce que les poignées ont la forme d'ouvertures (5) découpées dans la matière de l'enveloppe.
